# EUROPEAN PATENT APPLICATION

(11) **EP 4 141 619 A1**
(43) Date of publication of application: **01.03.2023**
(21) Application number: 21193154.8
(22) Date of filing: 26.08.2021
(51) Int. Cl.: G06F 3/00, G06F 3/01, G06F 3/04842

(54) **TOUCHLESS VISUALISATION AND COMMAND SYSTEM AND CORRESPONDING METHOD AND USE AND COMPUTER PROGRAM**

(71) Applicant: TK Elevator Innovation and Operations GmbH, 40472 Düsseldorf (DE)
(72) Inventor: ROTH, Sergio, 90110-260 Porto Alegre (BR)
(74) Representative: Michalski Hüttermann & Partner Patentanwälte mbB

(57) **Abstract**

The present invention refers to a touchless visualisation and command system, exhibiting at least one screen, at least one camera, and at least one control unit connected to the screen and the camera, wherein the camera is configured to capture at least one body part of a user and at least one gesture of the user being exposed within the camera's field of view and to acquire data characterizing said body part and said gesture, wherein the control unit is configured to generate a command based on the acquired data characterizing said body part and said gesture. Further, the present invention refers to a corresponding method and use and computer program.

## Description

### TECHNCAL FIELD

The present invention refers to a touchless visualisation and command system, exhibiting at least one screen, at least one camera, and at least one control unit connected to the screen and the camera, wherein the camera is configured to capture at least one body part of a user and at least one gesture of the user being exposed within the camera's field of view and to acquire data characterizing said body part and said gesture, wherein the control unit is configured to generate a command based on the acquired data characterizing said body part and said gesture. Further, the present invention refers to a corresponding method and use and computer program.

### BACKGROUND

There is a high demand for touchless user interface solutions in many areas of applications, especially also in situations in which touch solutions (as touchscreens and touch panels, especially all kinds of graphical user interfaces) become more popular. For example, in context with strong hygiene requirements, touchless solutions may be even more favourable for users and service providers than touch solutions. Thus, providing alternative means or devices to explore the functioning of touch panels or the like, especially by offering some additional features, to allow for operation without any touching actions may provide for further benefit.

### SUMMARY

It is an object of the present invention to provide for methods and devices for touchless user interaction, especially with mobile devices or stationary screens or the like. In particular, the object of the present invention is to provide for methods and devices which allow for touchless interaction also in context with system components which classically (until now) are commanded by touching.

The object of the invention is solved by the features of the independent main claims. Advantageous features are indicated in the subclaims. If technically possible, the teachings of the subclaims can be combined arbitrarily with the teachings of the main and subclaims.

In particular, the object is therefore solved by a touchless visualisation and command system, exhibiting at least one screen, at least one camera, and at least one control unit connected to the screen and the camera, wherein the camera is configured to capture at least one body part of a user and at least one gesture of the user being exposed within the camera's field of view and to acquire data characterizing said body part and said gesture, especially characterizing the pointing direction of said body part or said gesture, wherein the control unit is configured to generate a command based on the acquired data characterizing said body part and said gesture, wherein the control unit is configured to generate a virtual body part, especially a virtual finger or a virtual cursor, corresponding to the/said real body part of the user and to visualise said virtual body part on the screen in a position corresponding to a projected command position which is in conformance with the pointing direction of said body part or said gesture, based on the user's present gesture, wherein the control unit is configured to register a user's command (command decision) based on the type of gesture, especially based on the gesture's static duration at a predefined area corresponding to at least one command icon displayed at the screen. This also provides for further command options in case touching is not allowed or not possible or not recommendable. Thus, the present invention provides for touchless user interfaces, which optionally may also be implemented in systems which allow for touch commands also. Thereby, the present invention is based on the concept of providing a digital (virtual) twin which displays (visually plays back) the user's motions and gestures.

The features of the present invention aim to offer a device/method of operating standard panels using gesture recognition and virtual cursors or at least one virtual entity. At least one camera can capture an image of a user and send it to a processor (control unit), wherein an algorithm may recognize a pointing gesture and may activate a virtual cursor (virtual entity) by which at least one command can be accessed on the panel in a touchless manner, i.e. without any need of touching any part of the system. The present invention also provides for alternative means wherein a/the user can be fully virtualized as an avatar, wherein the user's movements can be copied/visualized as an avatar virtually controlling the operative panel of a screen of the system. The inventive method may also consist in highlighting each control in the panel following the user gestures, e.g. based on visual and/or acoustic feedback. By the time the user's gesture remains pointing a specific position at a specific highlighted control item/area (e.g. electronic/visual button) a time signalization (especially a process bar) may start on in context with recognition of that particular control command (e.g. button start to be filled in). The system may be configured such that control command will be executed in case the user's gesture remains pointing at that item until the end of the system timer (process bar fully processed). Such a configuration may facilitate confirmation/validation of a command (allegorically, same as double-click command using a computer mouse).

The computer program, especially algorithm, provided in/by said control unit may include cognitive/cognitional algorithms such as face recognition or the like.

In particular, the present invention also offers alternative means for operating any kind of touch panels based on touchless solution. The present invention also provides means for adopting existing touch screen technology for further touchless applications. This effect also favours reliable and sustainable enhancements of existing technology, especially in order to allow for following dynamic and flexible market adoption processes of touch panels technologies and. Thus, the present invention also allows for sustainable use of resources and it may also realize/facilitate continuously decreasing system costs for users and manufacturers.

According to one embodiment the control unit is configured to display (resp. to cause the system to display) at least one command icon on the screen and to correlate the pointing direction of said body part or said gesture with said at least one command icon or with a predefined area encompassing said at least one command icon, wherein the control unit is configured to evaluate the user's gesture being a command gesture (only) in case the gesture's static duration at the command icon is longer than a predefined time span, especially longer than one or two or three seconds. This also allows for further facilitating the manner of touchless commanding.

According to one embodiment the control unit is configured to display at least two command icons on the screen and to correlate the pointing direction of said body part or said gesture with one specific command icon or with a predefined area encompassing that specific command icon, especially based on comparison of a distance between the respective command icon and the present pointing direction. This also allows for enlarged functionality in a comfortable manner.

According to one embodiment the camera is positioned at/on the screen, especially above a panel of the screen. This also allows for advantageous capture and relatively large field of view.

According to one embodiment the camera's field of view at least covers the area of the screen or its projection, viewed from the camera's position. This also allows for optionally capturing the whole body of a user, or for capturing any gesture of the user almost irrespective of a relative position of the user.

According to one embodiment the control unit is configured to visualise/display the whole body of the user, especially as a virtual avatar. This also allows for making the user interface even more intuitive, especially in order to provide for good learning effects for new or aged users.

According to one embodiment the control unit is configured to carry out at least one of the following actions, based on a user's selection: registering/activating a telephone or internet call, selecting at least one option out of a plurality of options, registering at least one user input, e.g. a command corresponding to a mouse click or point-and-click command. This also allows for scaling the functionality options and for implementation of the inventive concept in context with any kind of electronic device or computer program.

According to one embodiment the control unit is configured to provide at least one feedback to the user out of the following group, based on a user's selection: acoustic feedback, visual feedback, haptic feedback. This also allows for further improvements in user interaction. According to one embodiment the control unit is configured to evaluate the pointing direction based on a projection of a/the user's arm and/or hand and/or finger. This also allows for determining a user's command quite irrespective of the kind of gesture.

According to one embodiment the touchless visualisation and command system is provided in conjunction with a touch screen. According to one embodiment the screen of the touchless visualisation and command system is a touch screen or is a screen also providing four touch command functionality. This respectively also allows for further options of user interaction, especially on context with very specific commands or in view of a backup control option in case there be any difficulties with touchless commanding/controlling.

The above mentioned object is also solved by a method of touchless visualisation and commanding, wherein at least one body part of a user is captured by means of at least one camera and at least one gesture of the user being exposed within the camera's field of view is captured by said camera and data characterizing said body part and said gesture is acquired by said camera, especially data characterizing the pointing direction of said body part or said gesture, wherein a command is generated based on the acquired data by means of a control unit which is connected to the said camera and to a screen, wherein a virtual body or body part is generated by said control unit, especially a virtual finger or a virtual cursor, wherein said virtual body part is visualised on said screen in a position corresponding to a projected command position which is in conformance with the pointing direction of said body part or said gesture, wherein a user's command (command decision) is registered by the control unit based on the type of gesture, especially based on the gesture's static duration at a predefined area corresponding to at least one command icon displayed at the screen. This provides for above mentioned advantages. Such a method can be carried out, in particular, by a system as described above.

According to one embodiment wherein at least one command icon is displayed on the screen, wherein the pointing direction of said body part or said gesture is correlated with said at least one command icon or with a predefined area encompassing said at least one command icon, wherein the user's gesture is evaluated being a command gesture in case the gesture's static duration at the command icon is longer than a predefined time span, especially longer than one or two or three seconds. This allows for realizing above mentioned advantages.

According to one embodiment, after a predefined time span of a gesture's static duration, a processing bar is visualised on the screen, the processing bar showing the actual processing status of the command. This also allows for realizing/implementing above mentioned advantages.

According to one embodiment, based on at least one processing bar visualised on the screen, processing time signalisation is carried out for the user, wherein the command is registered only in case the user holds on pointing at a/the predefined area till the end of the processing time. This also allows for further facilitating the manner of commanding and confirming the functioning of the device commanded/controlled by the user.

The above mentioned object is also solved by use of a system at least exhibiting a control unit, a screen and a camera, especially use of a system as described above, in particular in a studio, presentation centre, multimedia centre or in a cab/car/automobile or on a keyboard, for visualisation and commanding in a touchless manner, wherein the camera is arranged and aligned such that the camera's field of view is at least covering an area in front of the screen, in order to capture at least one body part of a user and at least one gesture of the user, wherein data characterizing said body part and said gesture is acquired by said camera and provided to said control unit, especially data characterizing the pointing direction of said body part or said gesture, wherein at least one command is generated based on the acquired data by the control unit, wherein a virtual body or body part is generated by said control unit, especially a virtual finger or a virtual cursor, wherein said virtual body part is visualised on said screen in a position corresponding to a projected command position which is in conformance with the pointing direction of said body part or said gesture, wherein a user's control/command (command decision) is registered by the control unit based on the type of gesture, especially based on the gesture's static duration at a predefined area corresponding to at least one command icon displayed at the screen. This provides for above mentioned advantages.

The above mentioned object is also solved by a computer program comprising instructions which, when the program is executed by a computer or control unit, cause the computer to execute the steps of a method as described above, especially when the program is executed by a control unit connected to a screen or panel, in particular by a control unit of a system as described above. This provides for above mentioned advantages. The screen or panel can be, e.g., a stationary screen or panel or a screen or panel of a mobile device like e.g. a smart phone. In particular, the computer program can be implemented in context with the control unit and/or camera and/or screen and/or any mobile device, as describes above.

### SHORT DESCRIPTION OF FIGURES

These and other aspects of the present invention will also be apparent from and elucidated with reference to the embodiments described hereinafter. Individual features disclosed in the embodiments can constitute alone or in combination an aspect of the present invention. Features of the different embodiments can be carried over from one embodiment to another embodiment. In the drawings:
Figure 1 shows a first situation of the touchless visualisation and command system according to one embodiment;
Figure 2 shows a second situation (or operational state) of the touchless visualisation and command system according to one embodiment;
Figure 3 shows a third situation (or operational state) of the touchless visualisation and command system according to one embodiment;
Figure 4 shows a fourth situation (or operational state) of the touchless visualisation and command system according to one embodiment;
Figures 5A, 5B show a first and second situation of the touchless visualisation and command system according to a further embodiment;
Figure 6 shows a third situation (or operational state) of the touchless visualisation and command system according to a further embodiment;

### DETAILED DESCRIPTION OF FIGURES

First, the reference signs are described in general terms; individual reference is made in connection with respective figures.

The present invention provides for a touchless visualisation and command system 10 comprising screen 1 with at least one panel 1a, a camera 5 having a predefinable field of view F5, and a control unit 11 (processor) which is connected to the camera 5 and the screen 1 resp. panel 1a. On the screen 1, several command icons (items) 3 can be displayed, wherein the control unit 11 may provide for predefined command areas 3a respectively surrounding and overlapping on of the icons 3, respectively. The camera's field of view F5 at least overlaps the area of the projection of the screen/panel, or may even be greater by a factor depending on the screen's dimensions. In case the screen is provided in a mobile device, the camera's field of view F5 can be greater for many times.

A user 20 or at least a user's body part 20a (arm 21, hand 22, finger 23, head/face 24) being positioned within the field of view F5 is analysed by the camera 5 in order to detect at least one gesture G and in order to calculate/determine a pointing direction PD. In order to facilitate the user providing correct and concise commands, the camera 5 and/or control unit 11 generates at least one of a virtual cursor VC, a virtual body part V20a (virtual entity), a complete virtual user V20 (avatar), especially in real time, i.e. without any perceptible time lag. In that context, feedback 12 to the user (especially visual feedback) can be provided by any kind of accentuation of the area pointed by the user, and also by a progress bar 7 (processing time signalisation).

Since the user is aware of a progress time or technically intended delay (especially in order to improve user-friendly interaction), based on the kind and duration of the user's gesture G, data D is generated and provided to control unit 11, in order to deduct/determine at least one command C to the system. In particular, the gesture's static duration TG (time/duration of commanding via gesture) may provide for a parameter in order to decide about a command being executed or not.

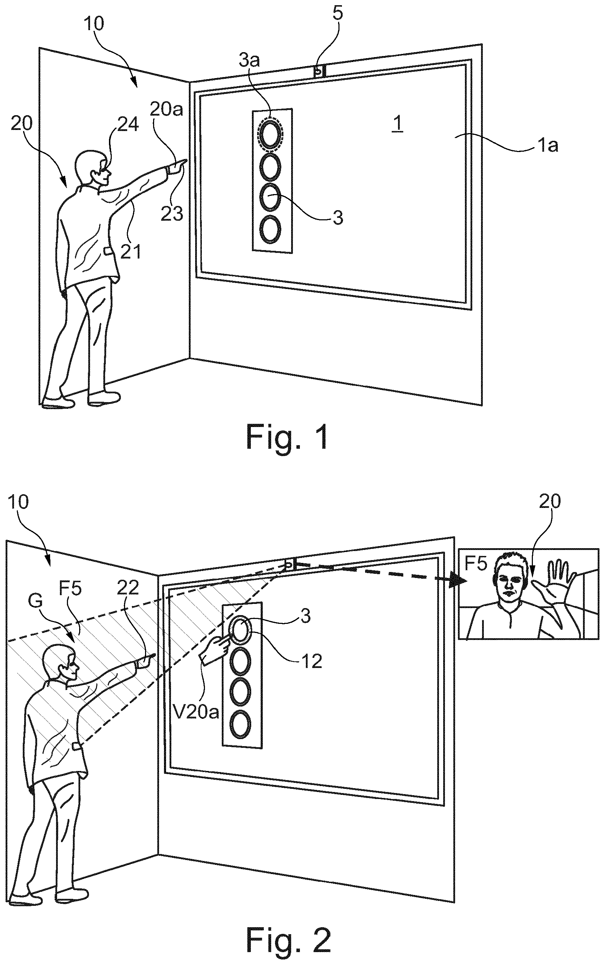

In **Fig. 1** the user 20 points up to the screen 1 (situation I).

In **Fig. 2** the camera 5 detects at least one gesture G of the user 20, and the control unit 11 controls the screen 1 resp. panel 1a to display a virtual body part V20a corresponding to the user's gesture G (situation II). As illustrated in Fig. 2, the gesture G is made by the arm 21 and the hand 22 and the finger 23, and the virtual body part V20a displayed on the screen is a virtual finger which moves according to the motion of the user's arm 21 resp. hand 22 resp. finger 23.

The topmost icon 3 is the icon which is presently activated by the user's gesture G generating at least one command C, wherein activation can be confirmed by system feedback 12 (especially visual feedback).

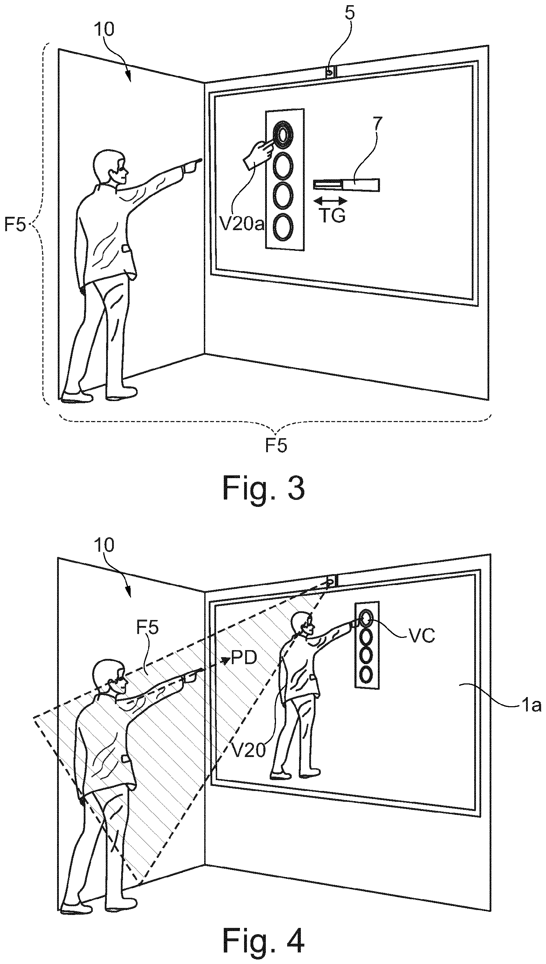

In **Fig. 3** the camera 5 detects the user's gesture G being static for a while, i.e., the user keeps the hand up pointing at the same area, and consequently, the virtual finger controlled by the control unit 11 remains at the same position, namely at the uppermost icon (situation III). In addition, a progress bar 7 (or any alternative processing time signalisation having same functions) can be displayed on the screen 1 in order to facilitated interaction with the user, especially in order to allow for a confirmation of a user's command. For example, the user remains pointing at the same area until the progress illustrated by progress bar 7 be accomplished (e.g., making a telephone call or the like); the user may thus confirm a command by holding on pointing at the same icon for a predefined time, e.g. for about two seconds. For example, processing time signalisation can also be carried out based on acoustic signals, alternatively or in addition to visual signals such as a progress bar.

The embodiment described in Fig. 1 to 3 may, e.g., be implemented in context with overhead /car screens and data projectors and panorama screens and in studios, presentation and multimedia centres.

**Fig. 4** illustrates an alternative way of providing a digital (virtual) twin on the screen. Not only a body part or gesture may be displayed, but also the whole user's body can be displayed as a kind of avatar (situation IIIa). Such a configuration of the control unit 11 facilitate may even more the action of finding the correct/desired command position (gesture direction) for the users.

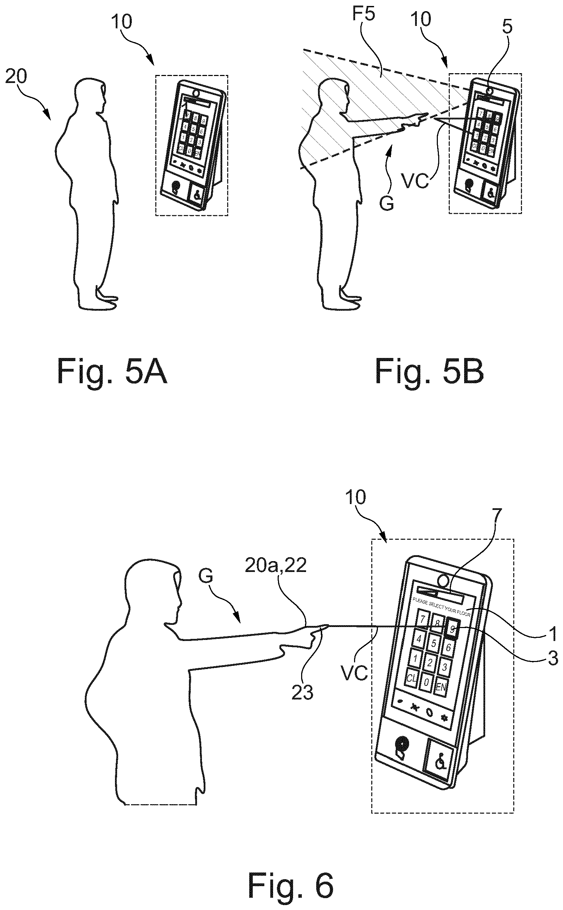

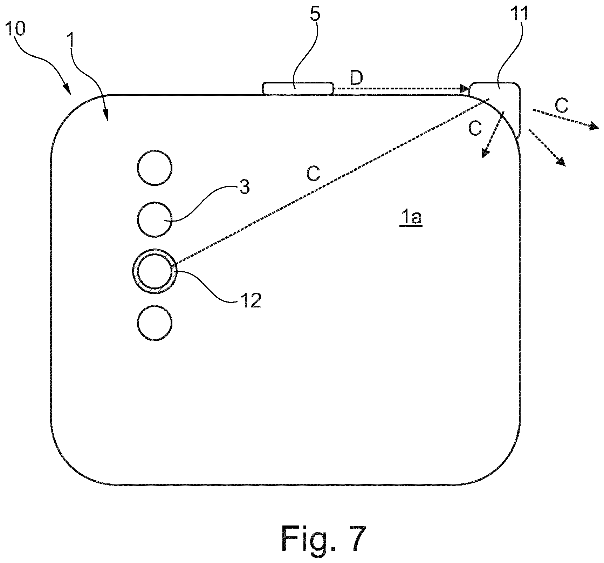

In **Fig. 5A, 5B****,** situations I and II are illustrated by referring to an alternative device which is considerably smaller than the screen 1 described above, e.g. a smart phone. Basically, gesture recognition may function in the same manner as described above. In particular, gesture recognition may be focused on the user's hand and fingers, since those body parts probably will mostly be utilized for controlling such relatively small devices.

In Fig. 6, the above mentioned situation III is illustrated by referring to that alternative device. The progress bar 7 can be displayed depending on the kind and duration of a user's gesture.

### List of reference signs

- 1: screen
- 1a: panel
- 3: command icon, item
- 3a: predefined command area
- 5: camera
- 7: progress bar

- 10: touchless visualisation and command system
- 11: control unit (processor)
- 12: feedback, especially visual feedback

- 20: user
- 20a: body part
- 21: arm
- 22: hand
- 23: finger
- 24: head, face

- C: command
- D: data
- F5: field of view of the camera
- G: gesture
- PD: pointing direction
- TG: gesture's static duration (time/duration of commanding via gesture)
- VC: virtual cursor
- V20: virtual user (avatar, virtual entity)
- V20a: virtual body part (virtual entity)

## Claims

1. Touchless visualisation and command system (10), exhibiting
at least one screen (1),
at least one camera (5),
at least one control unit (11) connected to the screen and the camera,
wherein the camera is configured to capture at least one body part (20a) of a user (20) and at least one gesture (G) of the user being exposed within the camera's field of view (F5) and to acquire data (D) characterizing said body part (20a) and said gesture (G), especially characterizing the pointing direction (PD) of said body part or said gesture,
wherein the control unit (11) is configured to generate a command (C) based on the acquired data (D),
wherein the control unit (11) is configured to generate a virtual body part (V20a), especially a virtual finger or a virtual cursor, corresponding to the/said real body part (20a) of the user and to visualise said virtual body part (V20a) on the screen (1) in a position corresponding to a projected command position which is in conformance with the pointing direction (PD) of said body part or said gesture, based on the user's present gesture,
wherein the control unit (11) is configured to register a user's command (C) based on the type of gesture (G), especially based on the gesture's static duration (TG) at a predefined area (3a) corresponding to at least one command icon (3) displayed on the screen.

2. Touchless visualisation and command system (10) according to claim 1, wherein the control unit (11) is configured to display at least one command icon (3) on the screen (1) and to correlate the pointing direction (PD) of said body part or said gesture with said at least one command icon or with a predefined area (3a) encompassing said at least one command icon, wherein the control unit is configured to evaluate the user's gesture being a command gesture in case the gesture's static duration (TG) at the command icon is longer than a predefined time span, especially longer than one or two or three seconds.

3. Touchless visualisation and command system (10) according to any of the preceding claims, wherein the control unit (11) is configured to display at least two command icons on the screen and to correlate the pointing direction of said body part or said gesture with one specific command icon or with a predefined area encompassing that specific command icon, especially based on comparison of a distance between the respective command icon and the present pointing direction.

4. Touchless visualisation and command system (10) according to any of the preceding claims, wherein the camera (5) is positioned at/on the screen, especially above a panel (3a) of the screen (1); and/or wherein the camera's field of view (F5) at least covers the area of the screen or its projection, viewed from the camera's position.

5. Touchless visualisation and command system (10) according to any of the preceding claims, wherein the control unit (11) is configured to visualise/display the whole body of the user, especially as a virtual avatar (V20).

6. Touchless visualisation and command system (10) according to any of the preceding claims, wherein the control unit (11) is configured to carry out at least one of the following actions, based on a user's selection: registering/activating a telephone or internet call, selecting at least one option out of a plurality of options, registering at least one user input.

7. Touchless visualisation and command system (10) according to any of the preceding claims, wherein the control unit (11) is configured to provide at least one feedback (12) to the user out of the following group, based on a user's selection: acoustic feedback, visual feedback, haptic feedback.

8. Touchless visualisation and command system (10) according to any of the preceding claims, wherein the control unit (11) is configured to evaluate the pointing direction (PD) based on a projection of a/the user's arm (21) and/or hand (22) and/or finger (23).

9. Touchless visualisation and command system (10) according to any of the preceding claims, wherein the touchless visualisation and command system (10) is provided in conjunction with a touch screen; and/or wherein the screen (1) of the touchless visualisation and command system is a touch screen or is a screen also providing four touch command functionality.

10. Method of touchless visualisation and commanding, wherein
- at least one body part (20a) of a user (20) is captured by means of at least one camera (5) and at least one gesture (G) of the user being exposed within the camera's field of view (F5) is captured by said camera, and data (D) characterizing said body part and said gesture is acquired by said camera (5), especially data characterizing the pointing direction of said body part or said gesture,
- a command (C) is generated based on the acquired data by means of a control unit (11) which is connected to the said camera and to a screen (1),
- a virtual body (V20) or body part (V20a) is generated by said control unit (11), especially a virtual finger or a virtual cursor,
- said virtual body part (V20, V20a) is visualised on said screen (1) in a position corresponding to a projected command position which is in conformance with the pointing direction (PD) of said body part or said gesture (G),
- a user's command (C) is registered by the control unit (11) based on the type of gesture, especially based on the gesture's static duration (TG) at a predefined area corresponding to at least one command icon displayed at the screen.

11. Method according to the preceding method claim, wherein at least one command icon (3) is displayed on the screen, wherein the pointing direction (PD) of said body part (20a) or said gesture (G) is correlated with said at least one command icon or with a predefined area (3a) encompassing said at least one command icon, wherein the user's gesture (G) is evaluated being a command gesture in case the gesture's static duration (TG) at the command icon is longer than a predefined time span, especially longer than one or two or three seconds.

12. Method according to any of the preceding method claims, wherein after a predefined time span of a gesture's static duration (TG), a processing bar (7) is visualised on the screen, the processing bar showing the actual processing status of a/the command (C).

13. Method according to any of the preceding method claims, wherein based on at least one processing bar (7) visualised on the screen, processing time signalisation is carried out for the user (20), wherein the command (C) is registered only in case the user holds on pointing at a/the predefined area (3, 3a) till the end of the processing time.

14. Use of a system (10) at least exhibiting a control unit (11), a screen (1), and a camera (5), especially use of a system (10) according to any of the device claims 1 to 9, in particular in a studio, presentation centre, multimedia centre or in a cab/car or on a keyboard, for visualisation and commanding in a touchless manner, wherein
- the camera (5) is arranged and aligned such that the camera's field of view (F5) is at least covering an area in front of the screen, in order to capture at least one body part (20a) of a user (20) and at least one gesture (G) of the user,
- data (D) characterizing said body part and said gesture is acquired by said camera (5) and provided to said control unit (11), especially data characterizing the pointing direction (PD) of said body part or said gesture,
- at least one command (C) is generated based on the acquired data by the control unit,
- a virtual body (V20) or virtual body part (V20a) is generated by said control unit, especially a virtual finger or a virtual cursor (VC),
- said virtual body part (V20a) is visualised on said screen (1) in a position corresponding to a projected command position which is in conformance with the pointing direction (PD) of said body part or said gesture,
- a user's command (C) is registered by the control unit (11) based on the type of gesture (G), especially based on the gesture's static duration (TG) at a predefined area (3a) corresponding to at least one command icon (3) displayed at the screen.

15. Computer program comprising instructions which, when the program is executed by a computer or control unit (11), cause the computer to execute the steps of the method according to at least one of the method claims 10 to 13, especially when the program is executed by a control unit (11) connected to a screen (1) or panel (1a).
